# EUROPEAN PATENT SPECIFICATION

(11) **EP 2 377 763 B1**
(45) Date of publication and mention of the grant of the patent: **18.09.2013**
(21) Application number: 11162560.4
(22) Date of filing: 15.04.2011
(51) Int. Cl.: B65B 23/06, B65G 47/252, B65G 69/16

(54) **Apparatus and method for turning eggs**
Vorrichtung und Verfahren zum Wenden von Eiern
Dispositif et procédé pour inverser des oeufs.

(30) Priority: 16.04.2010 EP 10004056
(43) Date of publication of application: 19.10.2011
(73) Proprietor: Moba Group B.V., 3771 VE Barneveld (NL)
(72) Inventor: Grootherder, Berend Derk, 6971 LG Brummen (NL)
(74) Representative: Jansen, Cornelis Marinus

(56) References cited:
- FR-A5- 2 030 636
- US-A- 3 311 216
- US-A- 3 369 644

## Description

The present invention relates to an apparatus for turning eggs.

An apparatus for turning eggs is known from, for example, US4189898. The apparatus described therein processes eggs coming directly from the poultry house. Such an apparatus is typically designated as 'farmpacker'. More particularly, it is elucidated in this document how such eggs are processed just before packing in an egg carton or an egg tray. Since the eggs are to end up in a known manner with their pointed end in the nests of such a packaging unit, it is necessary that the eggs, during their conveyance in a conveying direction T lying substantially in a horizontal plane, be rotated, from their lying position between two successive rollers, in at least two mutually perpendicular planes. In Fig. 1 of US4189898 it is clearly indicated how the whole movement proceeds:
- in a known manner, the eggs, lying on rotating cylinder-shaped rollers, have their pointed ends seeking one of the side guides;
- by friction between these side guides and the pointed end of an egg, the advancing rollers will turn the eggs with their rounded end facing in downstream direction;
- oriented in approximately that direction, the eggs at the end of this roller track are taken over into a receptacle;
- this receptacle itself turns the eggs having their pointed end upstream, downwardly, with their rounded side ending up at the top;
- thereupon this receptacle hands an egg over to a receiving unit which consists of two hand-shaped halves, this receiving unit itself moving further down; and
- finally, from this receiving unit the eggs are placed, with the pointed end directed downwards, into a nest or holder of a packaging unit, for example, a tray or an egg carton.

The receiving unit mentioned, after placement of the egg, will move back up again to receive a next egg from the receptacle, the receiving unit thus performing a cyclic reciprocating substantially vertical movement.

With the need for increased processing speeds and associated automation, such an apparatus requires further improvements. It appears that at higher speeds the eggs do not have time enough to be received and held by the receiving unit with sufficient clamping action. Further, the reciprocating movement of the receiving unit implies an inherent waiting time for eggs lying in readiness, and thus leads to loss of time and hence to limitation of processing capacity.

In order to remedy such shortcomings, there is provided an apparatus which is characterized by the features of claim 1. According to the invention, the apparatus comprises a turning track, situated in line with the row referred to, for rotating the eggs, in succession, to a direction with their pointed ends each pointing in upstream direction, and thereupon with their pointed ends rotating and ending up substantially vertically, wherein all rotation is effected by rolling movements.

With such an apparatus, a continuously moving stream of eggs is obtained in which no waiting and stop moments occur. As a result, with a single farmpacker larger quantities of eggs can be processed.

The invention may also be defined, for example, as follows: apparatus for turning eggs, comprising,
- feeding device configured for feeding eggs over a substantially horizontal surface, in particular in at least one row, and in particular such that the eggs are positioned with pointed ends first in a direction at right angles to the conveying direction T,
- a turning track, arranged to rotate the eggs fed by the feeding device each in a first rotation step to a direction in which the eggs each have their pointed end pointing in an upstream direction, in particular without fall movements of the eggs, wherein the turning track is arranged to rotate the eggs each, after the first rotation step, in a second rotation step to a position in which the eggs each have their pointed end directed substantially downwards, wherein all rotation is effected by rolling movements, with the first rotation step being carried out in particular by rolling each egg about a first rotation axis, with the second rotation step being carried out in particular by rolling each egg about a second rotation axis, and
- a discharge track, arranged for discharging the eggs from the turning track to a processing unit.

In a further embodiment, the apparatus according to the invention is characterized in that the turning track comprises three sections,
- with a first section, situated in line with the row and in a substantially horizontal plane, for, during conveyance, directing the eggs in the row with the long axis perpendicular to the conveying direction T,
- with a second section, situated in line with the first section and comprising a downward bend and extending from substantially horizontally to at least initially downwards, for, during conveyance, (in a rolling manner) rotating each egg in the row through an angle of substantially 90° whereby the pointed end is directed substantially upstream, and
- with a third section, situated in line with the first section and with the second section and extending substantially downwards, for, during conveyance, at least (in a rolling manner) rotating each egg in the row to a position in which the eggs each have their pointed end facing substantially downwards, in particular a rotation through an angle of at least 180°, whereby the pointed end, from said substantially upstream direction, is rotated in downstream direction, and ends up substantially vertically downwards.

What is achieved with the measures according to this characterizing feature is that the eggs perform a well-controlled and calmly executed movement during the large turn (for example, of at least 180°) in the last part of simultaneous rolling and rotating. Not only can unexpected and undesired interruptions be prevented in this way, but also the risk of egg breakage occurring can thereby be obviated to a large extent.

A traveling rolling movement of eggs being processed in a farmpacker is also known from EP512651. In that apparatus, the eggs, from the start when lying on rollers with the pointed end directed sideways, are in succession substantially slidingly rotated with the pointed end downstream, and immediately thereupon sliding further downwards. Doing so, a traveling speed of an egg is reached that becomes uncontrollable upon further increase and will inevitably result in a higher percentage of breakage. In order to improve controllability already in the embodiments being used, the eggs during the downward sliding movement, just before delivery into a packaging unit, are brought to a standstill. This movement is obtained with a curve track in which a recess is provided which gives the desired speed component. From such a position of standstill, they then fall into the packaging unit mentioned. It appears that both in the movement applied there and in the fall path, a substantial chance of breakage cannot be obviated.

In a further embodiment, the apparatus according to the invention has one or more of the following features: that the turning track comprises three sections,
- with a first section, situated in line with the row and in a substantially horizontal plane, for, during conveyance, directing the eggs in the row with the long axis perpendicular to the conveying direction T,
- with a second section, situated in line with the first section and comprising a downward bend and extending from substantially horizontally to at least initially downwards, for, during conveyance, rotating each egg in the row through an angle of substantially 90° whereby the pointed end is directed substantially upstream, and
- with a third section, situated in line with the first section and with the second section and extending substantially downwards, for, during conveyance, at least rotating each egg in the row through an angle of at least 180°, whereby the pointed end, from the substantially upstream direction, is rotated in downstream direction, and ends up substantially vertically down;
that the first section comprises an endless roller conveyor, having
- shafts, perpendicular to and connected with at least one endless chain and at fixed intervals or pitch distances from each other, wherein rollers in the at least one row having substantially a cylinder shape are fixedly arranged around the shafts, wherein each pair of rollers form a carrier position for a single egg,
- a driving unit for rotating the shafts, and
- edge guide elements on opposite sides of the rollers in the conveying direction T for stopping (i.e., supporting) the eggs rotating on the rollers and displaced sidewardly during conveyance;
that the second section comprises lift elements which at the downstream end of the first section lift each passing egg, whereby the rounded end is positioned on the downstream side;
that the lift elements are arranged as a toothing on a wheel rotating along,
with the pitch distance of the toothing corresponding to the pitch distance of the roller conveyor;
that the edge guide elements at the transition to the second section converge slightly;
that the third section comprises at least,
- a rolling element, arranged following and linking up with the roller conveyor,
wherein the rolling element supports the eggs during rotation of each rounded end and wherein each pointed end is directed from said substantially upstream to substantially vertically downward direction, and
- for each rotating egg, a first guide element which catches each such egg during rotation at the pointed end at a guiding end of the first guide element and moves along in the downward direction;
that the downward direction of travel of the first guide element comprises both a vertically downward component and a horizontally forward component directed in conveying direction T;
that the first guide element, as a part of a hinge element, is hingedly connected through a hinge pivot with a coupling piece which is connected with an endless curve conveyor which is guided in a first curve track, with said guide end on one side of the hinge pivot and with a curve follower on the other side of the hinge pivot for following a second curve track during downward movement;
that the rolling element is fixedly positioned with respect to the roller conveyor;
that the rolling element comprises a rod;
that the rod comprises at least partly a rolling surface of plastic having a well-defined coefficient of friction;
that the discharge track comprises at least:
- the guide element moving along for supporting the pointed end of each egg upon further movement thereof in the downstream direction, and
- a fixed second guide element which extends in downward direction for, during sliding, supporting and guiding the substantially rounded end of each successive egg; and
that the slide guide element forms a whole with the rolling element.

The invention furthermore provides a method which is characterized by the features of claim 15. The method, which can comprise use of the apparatus according to the present invention, provides the above-mentioned advantages.

Further details, features, and advantages of the present invention will be elucidated with reference to a drawing, in which:
FIG. 1 is a perspective view of a first exemplary embodiment of the turning track according to the present invention,
FIG. 2 is a cutaway side view of a few main elements of the turning track from FIG. 1, and
FIG. 3 is a top plan view of a part of the turning track according to FIG. 1.
In the different FIGURES the same numbers and reference characters designate the same parts and details.

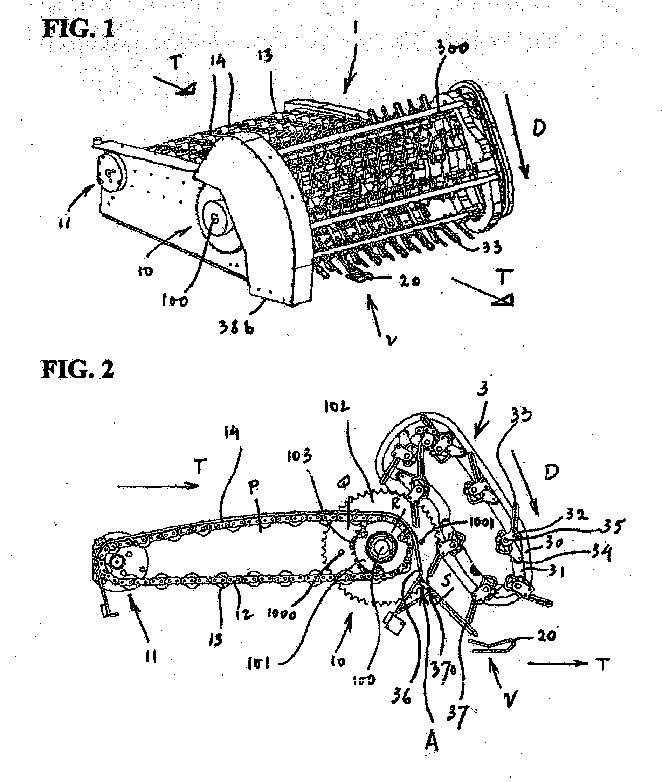

In FIG. 1 there is shown in an oblique top plan view a turning track 1 with an endless roller conveyor with rollers 13, to feed eggs (not shown) in a conveying direction T. As indicated in FIG. 1, six rows of these successive rollers 13 can be identified, running side by side in the direction T. Neighboring rollers 13 form nests for carrying eggs; thus, on each pair of (neighboring) rollers 13 an egg may be located. Upon forced rotation of the rollers 13 themselves, therefore, all eggs located between them will rotate as well. As a result of their asymmetrical shape, the eggs will at the same time rotate and move towards a side, in the direction in which their pointed end points. This is described in, for example, GB434861. In this way, on average, as many eggs will have their pointed end pointing in one direction as in the other, at right angles to the direction T. The endless roller conveyor in the embodiment shown is driven with a return wheel 10 whose shaft 100 is connected with a drive in a manner known to those skilled in the art, while the other end of the conveyor is passed around a return wheel 11. Between the rollers, to shield the rows, and also functioning as boundary to the eggs moving in transverse direction, (stationary) edge guide elements 14 are arranged. In the example shown, rods 14 of slightly resilient metal are used.

In FIG. 2 a side elevation of the apparatus according to FIG. 1 is represented. The rollers 13 (to feed the eggs in the conveying direction T) are all connected with an endless chain 12, for which the above-mentioned drive wheel 10 and the return wheel 11 are provided. Driving can be carried out via the drive shaft 100 of the return wheel. In the embodiment shown, driving pins 1000, 1001 are indicated which fit into a slot which is connected with the above-mentioned known drive (a single one of these pins 1000, 1001 can suffice). Further details on this drive are included in a parallel application which is understood to be inserted herein as reference. The drive of the chain 12 is obtained by a gearwheel 101 (whose teeth engage with the proper pitch in the links of this chain 12).

More particularly, for the conveyance path of the eggs, successive sections are indicated, viz., a first section PQ, a second section QR, and a third section RS. The configuration is such that conveyance during use first follows the direction T, over the path where the eggs are located on rollers 13. Thereupon, from a downstream end of the roller conveyor, conveyance follows a downward direction (following arrow D). Thereupon conveyance proceeds (from the area where the eggs - at the end of the downward guided movement - are received in holders 20 of a transfer conveyor 2) in a traveling direction T again. Hereinafter, for these sections the behavior and the movement of an egg moving and travelling there will be elucidated in detail.

As already indicated above, the eggs are transferred from any position on the upstream side of the endless conveyor onto the rollers 13 of that conveyor. In the first section PQ the eggs, after first being directed at any position on these rollers 13 with their axes perpendicular to the conveying direction T, will proceed to 'follow' the pointed end and move to either of the edge guide elements 14 (just like the movement described in detail in GB434861).

The track 1 is provided with lift elements 103 to push up passing eggs each at the rounded end, just before the descending bend of the chain 12 (i.e., before the third section RS). The present lift elements 103 during use rotate along with the gearwheel 101.

The operation of the lift elements 103 is as follows. When the eggs have arrived approximately adjacent location Q (i.e., the boundary between the first section PQ and the second section QR) and the pointed ends abut against edge guide elements 14 (with rounded ends lying more in the middle of a row than the pointed ends), the rounded ends are pushed up slightly with the lift elements 103 (just before the descending bend of the chain 12). Lifting is such that the egg is directed with its pointed end facing upstream (whereby the egg rolls, for example, about a first respective rotation axis, in particular about a substantially vertical axis), and is therefore directed with its rounded end facing in the direction of travel (downstream). The egg has thus been turned substantially through an angle of 90° with respect to the orientation of the egg in the first section QR.

The lift elements 103 are also connected with the drive shaft 100, so that the rotation of the elements 103 is carried out simultaneously with that of gearwheel 101. More particularly, the lift elements 103 form a toothing with a pitch distance matching and corresponding to that of the rollers 13. Thus, during travel of the chain 12 each next lift element 103 will enter between a next pair of rollers 13 (to lift an egg, if any is supported on those rollers, by the rounded end thereof).

At the end of the second section QR, at the location R where the chain 12 begins its return path and bends downwardly to some extent, each egg has its upstream pointed end directed upwards to some extent as a result of the downward bend of the conveying path (see FIG. 2).

Just beyond the location R (the boundary between the second and third sections QR, RS), the eggs in the exemplary embodiment shown here will have their downstream-positioned rounded ends (supported either on a lift element 103 or on a - downwardly extending - end part 36 of an edge guide element 14) caught, on a side opposite the roller conveyor, by first guide elements 33 moving along. The first guide elements 33 can receive the eggs over a short distance in a sliding fashion (with an outer side of the egg sliding over the guide element during tilting) in the respective egg position, in direction D, and can guide the eggs downwardly.

In the example, the first guide elements 33 are part of a curve conveyor 3, which is arranged opposite the roller conveyor. The present curve conveyor 3 comprises a chain, in particular an endless guide chain. More particularly, successive first guide elements 33 are provided, to accompany the successive eggs (coming from the roller conveyor) in their movements. Each first guide element 33 is connected through a hinge pivot 35 in a hinge element with a coupling piece 32 which itself is fixedly connected with the curve conveyor 3. The design is such that the first guide elements 33 each follow a first curve track 30. The first guide elements 33 are provided with parts/surfaces facing the eggs, which contact the passing eggs during use with relatively little friction.

In the elevation according to FIG. 2 one of the sides can be seen; however, to those skilled in the art, it will be clear that such a construction will typically be used on both sides of the turning track, as can be seen in FIG. 1.

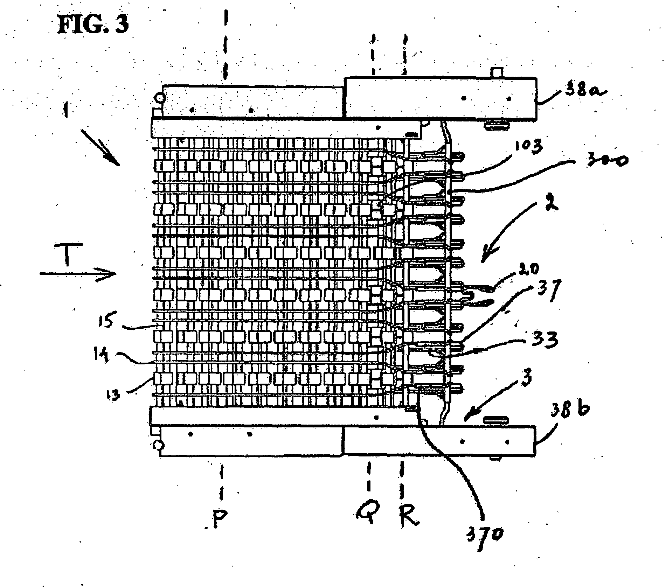

In FIGS. 2 and 3, in the further path in the direction D, second guide elements 37 are shown, each provided with an initial part or rolling element 370, for cooperation with the first guide elements 33. The initial part or rolling element 370 has at least an outer side facing the path of the eggs that is of material having suitable friction (to exert frictional forces on the eggs for the purpose of tilting the eggs).

During use, the eggs, when passing the third section RS, can each reach a first guide element 33 and a second guide element 37 with rolling element 370. The egg will then with its rounded end at the underside in a rolling manner engage the outer side of the rolling element 370, whereby the egg rolls over that outer side and the egg has its pointed end tilting further (towards the downstream side). Doing so, each egg in fact rolls about a second respective rotation axis (in particular a substantially horizontal axis). Falling of the egg (i.e., a movement where the egg is temporarily not engaged by the apparatus) is thus avoided, at least during rotation of the egg.

Due to the difference in a relatively high friction exerted on the eggs by the rolling element 370 on the one hand and a low friction (i.e., lower than the high friction mentioned) exerted on the eggs by the first guide element 33 on the other hand, each egg keeps rolling during the further downward movement in direction D.

After a rotation of at least 180° the egg reaches a position with its pointed end directed substantially downwardly. To those skilled in the art, it will be clear that the length of the rolling element 370 is selected such that, given such eggs and such speeds, this position is indeed going to be reached and assumed.

The configuration is such that further downwards where the rolling element 370 ends, the egg on one side slides over the further part of the second (stationary) guide element 37 and on the other side finds support in the first guide element 33 moving along downwardly. Just above the holder 20 as supplied via the transfer conveyor 2, the first guide element 33 moves forwards, away from the pointed end, and the egg is slidingly taken over by the holder 20 directly beneath.

As follows from the above: the part of the apparatus with which the above-described assisted rotation of the eggs is carried out comprises an endless curve conveyor 3 which is provided with the first guide elements 33. The first guide elements 33 are each hingedly coupled to the curve conveyor through the respective hinge pivots 35. Curve followers 34 are provided to define the hinged position of the guide elements 33 during the path of those elements 33. As further represented in FIG. 2, an egg is caught at a first end of a first hinge element and accompanied. At the other end of the hinge element and hence on the other side of the hinge pivot the guide element 33 comprises a curve follower 34, as mentioned, for example a freely rotating wheel. The curve followers 34 each follow a second curve track 31, also called tracking curve.

The assembly of a first guide element 33, associated first and second curve tracks 30, 31, and the respective hinge element with the first guide element 33 and the curve follower 34 as terminal ends, is so designed as to accomplish the above-mentioned tilting-along when catching the pointed end of an egg, and thereupon having this pointed end rotate through at least 180° during downward transport. The assembly is so configured that the first guide element 33 makes a pivoting movement (see FIG. 2) to guide the tilting mentioned.

It will be clear to those skilled in the art that the movements of the eggs while passing the above-mentioned three sections, whereby they are turned to the desired direction, are all performed while rolling.

FIG. 3 shows a top plan view of the turning track 1. Marked again are the first and second sections, PQ and QR, while of the third section RS only a very small part can be seen in this view. More in detail, shafts 15 are indicated on which the rollers 13 are mounted. Further, the edge guide elements 14 are indicated, both at the beginning of the roller track where they run substantially parallel, and at the downstream end where they converge. This convergence promotes turning through 90° in the second section. Indicated furthermore are the housings 38a, 38b, of the first and second curve tracks 30, 31, on opposite sides of the transfer conveyor 2. Also represented now is how in this exemplary embodiment for processing six rows the guide elements 33 are mounted on a common frame 300. It will be clear to those skilled in the art that this frame 300 as a whole will follow the earlier-mentioned curve tracks.

Although in this exemplary embodiment tilting is not done throughout the path RS, it will be clear to those skilled in the art that given a different choice of sub-parts in a corresponding different exemplary embodiment, dimensionings and settings may be used whereby the rolling element 370 is arranged immediately behind the rollers 13 with lift elements 103. Accordingly, in both exemplary embodiments, all form of rotation will be effected by rolling alone. With great advantage, this rolling provides for a favorable, controllable, continuous, and uninterrupted movement. More particularly, the movement may be characterized as a rotation which proceeds very gradually, with each egg following a continuous, progressive and uninterrupted path without any stop moment. Especially due to this, breakage and damage are further limited.

To those skilled in the art it will be clear that multiple variants are possible which are understood to be covered within the scope of protection of the appended claims.

### Key to symbols:

- 1: turning track
- 10: return wheel, drive wheel
- 100: drive shaft
- 1000: drive pin
- 1001: drive pin
- 101: gearwheel for driving roller conveyor
- 102: gearwheel for driving curve conveyor
- 103: lift element
- 11: return wheel, end wheel
- 12: endless chain of roller conveyor
- 13: roller
- 14: edge guide element
- 15: roller shaft
- 2: transfer conveyor
- 20: holder
- 3: curve conveyor
- 300: carrier frame for guide elements
- 30: first curve track
- 31: second curve track
- 32: coupling piece
- 33: first guide element
- 34: curve follower
- 35: hinge pivot
- 36: end part
- 37: second guide element
- 370: rolling element, initial part
- 38 a, b: housings of curve tracks

- T: conveying direction
- D: downward direction
- A: angle
- PQ: first section
- QR: second section
- RS: third section

## Claims

1. Apparatus for turning eggs, comprising in succession,
• a feeding device for feeding eggs substantially over a horizontal surface in a conveying direction T to turning means (1), whereby at least one row of successive eggs is formed,
• turning means (1), situated in line with said row, for rotating the eggs, in succession, to a direction with their pointed ends each pointing in upstream direction, and thereupon with their pointed ends rotating and ending up substantially vertically, the turning means (1) including a first section (PQ) comprises an endless roller conveyor, and
• a discharge track (20), situated in line with said row, for discharging the eggs from the turning means (1) to a processing unit.
• **characterized in that** the turning means are a turning track (1), wherein all rotation is effected by rolling movements, wherein the turning track comprises a rolling element (370), arranged following and linking up with said roller conveyor, wherein the rolling element (370) is arranged to support the eggs during rotation, by which rotation each pointed end is directed from said substantially upstream direction to a substantially vertically downward direction, wherein the rolling element (370) is provided with a rolling surface, which surface is arranged for rolling the eggs over that surface under the influence of friction.

2. An apparatus according to claim 1, wherein the turning track (1) comprises three sections,
- with the first section (PQ), situated in line with said row and in a substantially horizontal plane, for, during conveyance, directing the eggs in said row with the long axis perpendicular to the conveying direction T,
- with a second section (QR), situated in line with the first section and comprising a downward bend and extending from substantially horizontally to at least initially downwards, for, during conveyance, rotating each egg in said row through an angle of substantially 90° whereby the pointed end is directed substantially upstream, and
- with a third section(RS), situated in line with the first section and with the second section and extending substantially downwards and comprising the rolling element (370), for, during conveyance, at least rotating each egg in said row through an angle of at least 180°, whereby the pointed end, from said substantially upstream direction, is rotated in downstream direction, and ends up substantially vertically downwardly.

3. An apparatus according to any one of the preceding claims,
**characterized in that**
the first section (PQ) of the turning track (1) comprises an endless roller conveyor, having
- shafts, perpendicular to and connected with at least one endless chain and at fixed intervals or pitch distances from each other, wherein rollers (13) in said at least one row having substantially a cylinder shape are fixedly arranged around the shafts, with each pair of rollers forming a carrier position for a single egg,
- a driving unit for rotating said shafts, and
- edge guide elements (14) on opposite sides of the rollers in the conveying direction T for stopping the eggs rotating on the rollers and moving sidewardly during conveyance.

4. An apparatus according to claim 2 or 3, **characterized in that**
the apparatus is provided with a second section (QR) which comprises lift elements (103), which lift elements (103) at the downstream end of said first section (PQ) lift each passing egg, such that the rounded end of the egg is positioned on the downstream side.

5. An apparatus according to claim 4, **characterized in that**
the lift elements (103) are arranged as a toothing on a rotary wheel, with the pitch distance of said toothing corresponding to the pitch distance of said roller conveyor.

6. An apparatus according to any one of claims 3 to 5, **characterized in that** the edge guide elements (14) at the transition to the second section (QR) converge to some extent.

7. An apparatus according to any one of claims 2-6,
**characterized in that**
the apparatus is provided with the third section (RS) at least comprising:
- the rolling element (370), arranged following and linking up with said roller conveyor, and
- a first guide element (33) which is arranged to catch each egg during rotation at the pointed end, in particular at a guide end of the first guide element (33), with the first guide element (33) during use moving along with the egg in said downward direction.

8. An apparatus according to claim 6, **characterized in that**
said downward direction of movement of said first guide element (33) comprises both a vertically downward component and a horizontally forward component directed in the conveying direction T.

9. An apparatus according to claim 7 or 8, **characterized in that**
the first guide element (33), as part of a hinge element, is hingedly connected through a hinge pivot (35) with a coupling piece (32) which is connected with an endless curve conveyor (3) which is guided in a first curve track (30), with said guide end on one side of the hinge pivot (35) and with a curve follower (34) on the other side of the hinge pivot (35) for following a second curve track during downward movement.

10. An apparatus according to any one of claims 7 to 9, **characterized in that** the rolling element (370) of said third section (RS) is fixedly positioned with respect to the roller conveyor.

11. An apparatus according to claim 10, **characterized in that**
the rolling element (370) comprises a rod.

12. An apparatus according to any of the preceding claim 10 or 11,
**characterized in that**
the rolling element (370) comprises, at least partly a rolling surface of plastic having a well-defined coefficient of friction.

13. An apparatus according to any one of the preceding claims,
**characterized in that**
the discharge track comprises at least,
- at least one guide element (33) moving along for supporting the pointed end of each egg upon further movement thereof in the downstream direction, and
- a fixed second guide element (37) which extends in downward direction for, during sliding, supporting and guiding the substantially rounded end of each successive egg.

14. An apparatus according to any one of claims 7 to 12 in combination with claim 13, **characterized in that**
the slide guide element forms a whole with the rolling element (370).

15. A method for turning eggs, comprising:
• feeding the eggs in a conveying direction T in at least one row, whereby the eggs are first positioned with their pointed ends in a direction perpendicular to the conveying direction T,
• in a first step, turning each egg to a direction in which the egg has its pointed end pointing in an upstream direction,
in a second step, rotating each egg to a position in which the egg has its pointed end directed substantially downwards,
wherein all rotation is effected by rolling movements, in particular without thereby making any fall movement, and
• discharging the turned eggs.

## Patentansprüche

1. Vorrichtung zum Wenden von Eiern, umfassend in Folge:
- eine Zuführvorrichtung, um Eier über eine im Wesentlichen horizontale Fläche in einer Förderrichtung T Wendemitteln (1) zuzuführen, wobei mindestens eine Reihe aufeinanderfolgender Eier gebildet wird,
- Wendemittel (1), angeordnet in einer Linie mit der Reihe zum Drehen der Eier nacheinander in eine Richtung, in der sie mit ihren spitzen Enden jeweils stromaufwärts weisen und anschließend mit ihren spitzen Enden rotieren und im Wesentlichen vertikal enden, wobei die Wendemittel (1) einen ersten Abschnitt (PQ), umfassend einen Endlosrollenförderer, aufweisen, und
- eine Abführspur (20), angeordnet in einer Linie mit der Reihe zum Abführen der Eier von den Wendemitteln (1) zu einer Verarbeitungsvorrichtung,
**dadurch gekennzeichnet, dass**
es sich bei den Wendemitteln um eine Wendespur (1) handelt, wobei die gesamte Drehung durch Rollbewegungen erfolgt, wobei die Wendespur ein Rollelement (370) umfasst, angeordnet nach und verbunden mit dem Rollenförderer, wobei das Rollelement (370) angeordnet ist, um die Eier während der Drehung zu stützen, durch welche Drehung jedes spitze Ende aus der im Wesentlichen Stromaufwärtsrichtung zu einer im Wesentlichen vertikal nach unten weisenden Richtung gerichtet ist, wobei das Rollelement (370) mit einer Rollfläche versehen ist, die angeordnet ist, um unter dem Einfluss von Reibung die Eier über diese Fläche zu rollen.

2. Vorrichtung nach Anspruch 1, wobei die Wendespur (1) drei Abschnitte umfasst,
- deren erster Abschnitt (PQ), angeordnet in einer Linie mit der Reihe und in einer im Wesentlichen horizontalen Ebene, um während des Förderns die Eier in der Reihe mit der Längsachse lotrecht zur Förderrichtung T auszurichten,
- mit einem zweiten Abschnitt (QR), angeordnet in einer Linie mit dem ersten Abschnitt und umfassend eine Abwärtskrümmung und verlaufend von einer im Wesentlichen horizontalen Richtung zu einer mindestens anfänglich Abwärtsrichtung, um während des Förderns jedes Ei in der Reihe um einen Winkel von im Wesentlichen 90° zu drehen, wobei das spitze Ende im Wesentlichen stromaufwärts gerichtet ist, und
- mit einem dritten Abschnitt (RS), angeordnet in einer Linie mit dem ersten Abschnitt und mit dem zweiten Abschnitt und verlaufend im Wesentlichen abwärts und umfassend das Rollelement (370), um während des Förderns mindestens jedes Ei in der Reihe um einen Winkel von mindestens 180° zu drehen, wobei das spitze Ende aus der im Wesentlichen Stromaufwärtsrichtung in Stromabwärtsrichtung gedreht wird und im Wesentlichen vertikal abwärts endet.

3. Vorrichtung nach einem der vorhergehenden Ansprüche,
**dadurch gekennzeichnet, dass**
der erste Abschnitt (PQ) der Wendespur (1) einen Endlosrollenförderer umfasst mit
- Wellen, lotrecht zu und verbunden mit mindestens einer Endloskette und in festen Intervallen oder Zwischenabständen voneinander, wobei Rollen (13) in der mindestens einen Reihe eine im Wesentlichen zylindrische Form aufweisen und ortsfest um die Wellen angeordnet sind, wobei jedes Rollenpaar eine Trägerposition für ein einzelnes Ei bildet,
- einer Antriebsvorrichtung zum Drehen der Wellen und
- Kantenführungselementen (14) an entgegengesetzten Seiten der Rollen in der Förderrichtung T, um das Drehen der Eier auf den Rollen und die Seitwärtsbewegung während des Förderns anzuhalten.

4. Vorrichtung nach Anspruch 2 oder 3,
**dadurch gekennzeichnet, dass**
die Vorrichtung einen zweiten Abschnitt (QR) aufweist, der Hebeelemente (103) umfasst, welche Hebeelemente (103) am stromabwärts gerichteten Ende des ersten Abschnitts (PQ) jedes vorbeigeführte Ei so drehen, dass das gerundete Ende des Eis zur stromabwärts gerichteten Seite positioniert wird.

5. Vorrichtung nach Anspruch 4,
**dadurch gekennzeichnet, dass**
die Hebeelemente (103) als Verzahnung auf einem Drehrad angeordnet sind, wobei der Zwischenabstand der Verzahnung dem Zwischenabstand des Rollenförderers entspricht.

6. Vorrichtung nach einem der Ansprüche 3 bis 5,
**dadurch gekennzeichnet, dass**
die Kantenführungselemente (14) am Übergang zum zweiten Abschnitt (QR) teilweise konvergieren.

7. Vorrichtung nach einem der Ansprüche 2 bis 6,
**dadurch gekennzeichnet, dass**
die Vorrichtung mit dem dritten Abschnitt (RS) versehen ist, der mindestens folgendes umfasst:
- das Rollelement (370), angeordnet nach und gekoppelt mit dem Rollenförderer, und
- ein erstes Führungselement (33), angeordnet zum Auffangen jedes Eis während der Drehung am spitzen Ende, insbesondere an einem Führungsende des ersten Führungselements (33), wobei sich das erste Führungselement (33) bei Verwendung zusammen mit dem Ei in Abwärtsrichtung bewegt.

8. Vorrichtung nach Anspruch 6,
**dadurch gekennzeichnet, dass**
die Abwärtsrichtung der Bewegung des ersten Führungselements (33) sowohl eine vertikale Abwärtskomponente als auch eine horizontale Vorwärtskomponente, ausgerichtet in Förderrichtung T, umfasst.

9. Vorrichtung nach Anspruch 7 oder 8,
**dadurch gekennzeichnet, dass**
das erste Führungselement (33) als Teil eines Scharnierelements schwenkend durch einen Scharnierzapfen (35) mit einem Kopplungsstück (32) verbunden ist, das mit einem Endloskurvenförderer (3) verbunden ist, der in eine erste Kurvenspur (30) gelenkt wird, mit dem Führungsende auf einer Seite des Scharnierzapfens (35) und mit einem Kurvenfolger (34) auf der anderen Seite des Scharnierzapfens (35) zum Folgen einer zweiten Kurvenspur während der Abwärtsbewegung.

10. Vorrichtung nach einem der Ansprüche 7 bis 9,
**dadurch gekennzeichnet, dass**
das Rollelement (370) des dritten Abschnitts (RS) ortsfest in Bezug auf den Rollenförderer positioniert ist.

11. Vorrichtung nach Anspruch 10,
**dadurch gekennzeichnet, dass**
das Rollelement (370) einen Stab umfasst.

12. Vorrichtung nach einem der vorhergehenden Ansprüche 10 oder 11,
**dadurch gekennzeichnet, dass**
das Rollelement (370) mindestens teilweise eine Rollfläche aus Kunststoff mit einem eindeutig definierten Reibungskoeffizienten umfasst.

13. Vorrichtung nach einem der vorhergehenden Ansprüche,
**dadurch gekennzeichnet, dass**
die Abführspur mindestens folgendes umfasst:
- mindestens ein mitlaufendes Führungselement (33), um das spitze Ende von jedem Ei bei dessen weiterer Bewegung in Abwärtsrichtung stützt, und
- ein in Abwärtsrichtung verlaufendes ortsfestes zweites Führungselement (37), um während des Gleitens das im Wesentlichen gerundete Ende von jedem aufeinanderfolgenden Ei zu stützen und zu führen.

14. Vorrichtung nach einem der Ansprüche 7 bis 12 in Kombination mit Anspruch 13, **dadurch gekennzeichnet, dass** das Gleitführungselement eine Einheit mit dem Rollelement (370) bildet.

15. Verfahren zum Wenden von Eiern, umfassend:
• das Zuführen der Eier in einer Förderrichtung T in mindestens einer Reihe, wobei die Eier zuerst mit ihren spitzen Enden in einer Richtung lotrecht zur Förderrichtung T positioniert sind,
• in einem ersten Schritt, das Drehen von jedem Ei in eine Richtung, in der das spitze Ende des Eis in eine Stromaufwärtsrichtung weist,
• in einem zweiten Schritt, das Drehen von jedem Ei in eine Position, in der das spitze Ende des Eis im Wesentlichen abwärts gerichtet ist,
wobei jede Drehung durch Rollbewegungen erfolgt, insbesondere ohne dabei irgendeine fallende Bewegung zu machen, und
• das Abführen der gedrehten Eier.

## Revendications

1. Appareil destiné à faire pivoter des oeufs, comprenant à la suite :
• un dispositif d'approvisionnement pour approvisionner les oeufs sensiblement sur une surface horizontale dans une direction de transport T vers des moyens de pivotement (1), grâce à quoi au moins une rangée d'oeufs successifs est formée ;
• des moyens de pivotement (1), situés en ligne avec ladite rangée, pour faire pivoter les oeufs, à la suite, vers une direction, leurs extrémités pointues pointant chacune dans une direction en amont, et leurs extrémités pointues pivotant et se retrouvant sensiblement de manière verticale, les moyens de rotation (1) comprenant une première section (PQ) qui comprend un transporteur à rouleaux sans fin ; et
• un chemin d'évacuation (20), situé en ligne avec ladite rangée, pour évacuer les oeufs en provenance des moyens de rotation (1) vers une unité de traitement ;
**caractérisé en ce que** les moyens de pivotement sont un chemin de pivotement (1), dans lequel tout le pivotement est exécuté par des mouvements de roulement, dans lequel le chemin de pivotement comprend un élément de roulement (370), agencé après ledit transporteur à rouleaux et relié à celui-ci, dans lequel l'élément de roulement (370) est agencé pour supporter les oeufs pendant un pivotement, pivotement grâce auquel chaque extrémité pointue est dirigée à partir de ladite direction sensiblement en amont vers une direction vers le bas sensiblement verticale, dans lequel l'élément de roulement (370) est doté d'une surface de roulement, laquelle surface est agencée pour faire rouler les oeufs sur cette surface sous l'influence de frottements.

2. Appareil selon la revendication 1, dans lequel le chemin de pivotement (1) comprend trois sections :
- une première section (PQ), située en ligne avec ladite rangée et dans un plan sensiblement horizontal, pour diriger les oeufs dans ladite rangée, pendant leur transport, l'axe long étant perpendiculaire à la direction de transport T ;
- une deuxième section (QR), située en ligne avec la première section et comprenant une courbure vers le bas et s'étendant à partir d'une position sensiblement horizontale vers une position vers le bas au moins au début, pour faire pivoter chaque oeuf dans ladite rangée, pendant le transport, d'un angle sensiblement égal à 90°, grâce à quoi l'extrémité pointue est sensiblement dirigée en amont ; et
- une troisième section (RS), située en ligne avec la première section et avec la deuxième section et s'étendant sensiblement vers le bas et comprenant l'élément de roulement (370), pour faire pivoter au moins chaque oeuf dans ladite rangée, pendant le transport, d'un angle au moins égal à 180°, grâce à quoi l'extrémité pointue pivote, à partir de ladite direction sensiblement en amont, dans la direction en aval, et se retrouve de manière sensiblement verticale vers le bas.

3. Appareil selon l'une quelconque des revendications précédentes, **caractérisé en ce que** :
la première section (PQ) du chemin de pivotement (1) comprend un transporteur à rouleaux sans fin, présentant :
- des arbres, perpendiculaires à une chaîne sans fin au moins et reliés à celle-ci, et à intervalles ou à distances de pas fixes les uns des autres, dans lequel les rouleaux (13) dans ladite au moins une rangée présentant sensiblement une forme de cylindre, sont agencés fixement autour des arbres, chaque paire de rouleaux formant une position porteuse pour un seul oeuf ;
- une unité d'entraînement pour faire tourner lesdits arbres ; et
- des éléments de guidage de bord (14) sur les côtés opposés des rouleaux dans la direction de transport T, pour arrêter les oeufs pivotant sur les rouleaux et se déplaçant vers les côtés pendant le transport.

4. Appareil selon la revendication 2 ou 3, **caractérisé en ce que** :
l'appareil est doté d'une deuxième section (QR) qui comprend des éléments de levage (103), lesquels éléments de levage (103) lèvent chaque oeuf passant au niveau de l'extrémité en aval de ladite première section (PQ), de telle sorte que l'extrémité arrondie de l'oeuf soit positionnée sur le côté en aval.

5. Appareil selon la revendication 4, **caractérisé en ce que** :
les éléments de levage (103) sont agencés sous la forme d'une denture sur une roue rotative, la distance de pas de ladite denture correspondant à la distance de pas dudit transporteur à rouleaux.

6. Appareil selon l'une quelconque des revendications 3 à 5, **caractérisé en ce que** :
les éléments de guidage de bord (14) convergent dans une certaine mesure au niveau de la transition vers la deuxième section (QR).

7. Appareil selon l'une quelconque des revendications 2 à 6, **caractérisé en ce que** :
l'appareil est doté de la troisième section (RS) qui comprend au moins :
- l'élément de roulement (370), agencé après ledit transporteur à rouleaux et relié à celui-ci ; et
- un premier élément de guidage (33) qui est agencé pour saisir chaque oeuf pendant la rotation au niveau de l'extrémité pointue, en particulier au niveau d'une extrémité de guidage du premier élément de guidage (33), le premier élément de guidage (33) se déplaçant, en service, l'oeuf étant dans ladite direction vers le bas.

8. Appareil selon la revendication 6, **caractérisé en ce que** :
ladite direction de déplacement vers le bas dudit premier élément de guidage (33) comprend une composante vers le bas de manière verticale et une composante vers l'avant de manière horizontale dirigée dans la direction de transport T.

9. Appareil selon la revendication 7 ou 8, **caractérisé en ce que** :
le premier élément de guidage (33), en tant que partie d'un élément de charnière, est relié de manière articulée par l'intermédiaire d'un pivot de charnière (35) à une partie de couplage (32) qui est reliée à un transporteur en courbe sans fin (3) qui est guidé dans un premier chemin en courbe (30), avec ladite extrémité de guidage sur un côté du pivot de charnière (35) et avec un dispositif de suivi de courbe (34) sur l'autre côté du pivot de charnière (35) pour suivre un second chemin en courbe pendant un déplacement vers le bas.

10. Appareil selon l'une quelconque des revendications 7 à 9, **caractérisé en ce que** :
l'élément de roulement (370) de ladite troisième section (RS) est positionné fixement par rapport au transporteur à rouleaux.

11. Appareil selon la revendication 10, **caractérisé en ce que** :
l'élément de roulement (370) comprend une tige.

12. Appareil selon la revendication 10 ou 11, **caractérisé en ce que** :
l'élément de roulement (370) comprend, en partie au moins, une surface de roulement en matière plastique ayant un coefficient de frottement bien défini.

13. Appareil selon l'une quelconque des revendications précédentes, **caractérisé en ce que** :
le chemin d'évacuation comprend au moins :
- au moins un élément de guidage (33) se déplaçant le long de celui-ci, pour supporter l'extrémité pointue de chaque oeuf lors d'un autre déplacement de celui-ci dans la direction en aval ; et
- un second élément de guidage fixe (37) qui s'étend dans la direction vers le bas pour supporter et guider, pendant un glissement, l'extrémité sensiblement arrondie de chaque oeuf successif.

14. Appareil selon l'une quelconque des revendications 7 à 12 en association avec la revendication 13, **caractérisé en ce que** :
l'élément de guidage coulissant forme un tout avec l'élément de roulement (370).

15. Procédé destiné à faire pivoter des oeufs, comprenant :
• l'approvisionnement des oeufs dans une direction de transport T dans au moins une rangée, grâce à quoi les oeufs sont d'abord positionnés avec leurs extrémités pointues dans une direction perpendiculaire à la direction de transport T ;
• dans une première étape, le fait de tourner chaque oeuf vers une direction dans laquelle l'extrémité pointue de l'oeuf pointe dans une direction en amont ;
• dans une deuxième étape, le pivotement de chaque oeuf vers une position dans laquelle l'extrémité pointue de l'oeuf est dirigée sensiblement vers le bas, dans lequel toute la rotation est exécutée par des mouvements de roulement, en particulier sans exécuter ainsi aucun mouvement de chute ; et
• l'évacuation des oeufs qui ont pivoté.
